# EUROPEAN PATENT APPLICATION

(11) **EP 1 643 749 A1**
(43) Date of publication of application: **05.04.2006**
(21) Application number: 05022728.9
(22) Date of filing: 17.02.2003
(51) Int. Cl.: H04N 1/00

(54) **System and method for processing and ordering photographic prints**

(30) Priority: 22.02.2002 US 358782 P; 05.08.2002 US 401363 P; 14.08.2002 US 219907
(62) Divisional of application: 03003609.9
(71) Applicant: FUJI PHOTO FILM CO., LTD., Minami-Ashigara-shi, Kanagawa (JP)
(72) Inventor: Yokoo, Kenji, Minato-ku, Tokyo (JP); Brownstein, Scott, Rochester, NY 14626 (US); Caine, Holden R., Boulder, CO 80302 (US)
(74) Representative: Klunker . Schmitt-Nilson . Hirsch

(57) **Abstract**

A method for selecting and ordering photographic prints (122) from a remote location that is apart from a lab (104). A roll of exposed film (118, 400) may be processed to produce film images (402, 404) of the images on the roll (118, 400), which may be scanned to create a digital image file. The digital image file may be used to create a positive high-resolution digital image (408, 412) and/or a corresponding positive low-resolution digital image (406, 410). A lab digital image file is created, including digital image data (210) related to the low-resolution digital images (406, 410) and embedded lab meta data (220). At the remote location the lab digital image file is manipulated to display the digital images. One of the digital images at the remote location may be selected, along with order parameters. A studio digital image file (200) is created, including the digital image data (210), the embedded lab meta data (220) and embedded order meta data (230). A photographic print (122) may then be created using the lab digital image file or the corresponding film image.

## Description

### BACKGROUND OF THE INVENTION

### Field of the Invention

The present invention is directed to the field of photo processing and, more particularly, to the selection and ordering of photographic film images for printing and other image related services.

### Description of the Related Art

Presently, systems exist for the selection and processing of photographic prints and images by a user at a location remote from a lab. U.S. Patent No. 5,666,215 to Fredlund et al., (the "'215 Patent") discloses a method and system whereby a user may select and process photographic film images from his home. A user or photographer takes pictures and sends the exposed film to a photo processing center, commonly referred to as a "photo lab." At the lab, digital images are created from the film images on the exposed film using a scanning process that is well known in the art. In order to allow a remote user to select particular digital images for printing, the '215 patent requires that the lab manipulate the digital image such that an index number is displayed thereon. The index numbers correspond to the frame numbers found on the film negative to facilitate the matching of digital images with the associated film image. The manipulated digital images are then forwarded to the remote user or photographer, who can view the digital images on a computer system and can select images for printing by transmitting the corresponding index numbers back to the lab. The lab can then match the index number to the corresponding film image and create the selected print.

In the '215 patent method, the lab uses the film manufacturer's film frame numbers (i.e., 1,1A, 2, 2A...) that are placed on photographic film during manufacturing to facilitate the matching of photographic prints with their associated negatives during the manufacture of subsequent reprints and enlargements. Although this process may be suitable for a conventional, single roll, consumer "all optical" manufacturing process, it is far too limiting for professional or even many consumer digital or hybrid systems.

When a digital image is viewed by a user at a remote location, the system and method described by the '215 patent requires the display of index numbers that have a one-to-one correspondence with the manufacturer's frame number on every displayed digital image at the user's location. This display of such index numbers is inconvenient and not necessary for professional photographers. Moreover, the requirement adds the step of manipulating the scanned digital images to produce a display file having the index numbers displayed thereon.

Further, when creating digital image files from the photographic negatives, the system described by the '215 patent relies on the relationship between transmitted digital file names and externally stored information to match the digital images with their corresponding film images on the photographic film.

Certain drawbacks exist for systems that utilize the manufacturer's frame numbers on the processed film and/or lab-generated index numbers that have a one-to-one correspondence with the manufacturer's frame numbers. For example, for professional photographers and professional labs who frequently treat medium format cameras or films which have many different frame formats (e.g., 6 x 4.5, 6 x 7, 6 x 6, 6 x 8 and 6 x 9), it is almost impossible to utilize the manufacturer's frame numbers on the processed film for ordering or identifying the specific film images.

Additionally, at the lab, manufacturer's frame numbers themselves cannot differentiate between multiple rolls of film within a single order, and cannot contain any lab specific processing information. These manufacturer's numbers do not convey photo lab specific information, but instead, convey film manufacturing information and rely on pre-exposed human and machine-readable DX codes or pre-flashed borders to locate individual frames. This information is placed on the film at time of manufacture, not at a lab at the time of photo finishing.

As a result, lab identification systems can often generate long and or varied physical frame identification information, including not only sequential frame numbers but also frame location information, order and customer identification data and other processing related data. Using simple frame index naming can lead to serious "in lab" manufacturing system limitations, resulting in increased manufacturing cost and potentially reduced quality or incorrect order fulfillment.

As a result, even in situations where a manufacturer's frame numbers may appear on the film, labs generally ignore the manufacturer's frame number information and use instead simpler "sequential" frame numbering systems based on physical punch marks placed on the film after processing or other physical information. These marks serve the dual functionality of both identifying the frames as well as physically locating them for subsequent operations such as scanning and/or printing. Simple manufacturer's frame numbers, however, even when present, are of little or no use in physically locating film images or exposed pictures. Systems that rely on manufacturer's frame numbers, and/or index numbers that correspond on a one-to one basis with the manufacturer's frame numbers are only suitable for a one roll, consumer film processing and are inconvenient for multi-roll, multi-order, professional photographer film processing.

Additionally, systems such as that described by the '215 patent require that the user identify selected digital images by using index numbers that necessarily correspond directly to, and have all of the limitations of, the manufacturer's frame numbers. Also, these index numbers are displayed on the digital images as viewed by the user. Using such information for frame identification in consumer systems can lead to serious aesthetic difficulties in graphic user interfaces (GUI) and significant customer confusion. In this type of system, a photographer, or user, cannot use his own personal custom image indexing system but instead, is restricted to using a limited indexing system that is inextricably tied to the manufacturer's frame numbers.

Still further, presently, systems rely on the relationship between transmitted digital file names and externally stored information to reference selected digital images with the film images on the photographic film. This type of system is susceptible to complete failure when digital files are renamed either intentionally by consumers or by transmission or storage sub-systems when the digital files are transmitted or stored respectively.

Presently, it is also known to use meta data in conjunction with digital images and associated digital image files. In particular, embedded or tagged meta data has been disclosed as a method for providing copyright protection for digital images. Meta data may be used to provide information about a digital picture, such as information that may be used to classify or categorize the digital image. Often, meta data is stored along with a digital image file as a separate file, or is stored in the header of the digital image file. The meta data, however, may also be embedded in the digital image file to, for example, be used as a digital watermark to help protect the rights of the author or owner of the digital image. For example, information about the author of the digital image such as, for example, a photographer's name, may be embedded as meta data within the digital image file so that this information may be available when the digital image is used and payment is sought by the owner or creator. As discussed above, embedded or tagged meta data of this type may be related to the author or owner of the copyrighted image, and other similar related information directed at protecting the rights of the owner or creator of the image.

Presently, it is also known to use meta data to provide shooting related data regarding a digital image so that the print quality of the digital image may be optimized during printing. A system that uses meta data in this manner is the Printpix™ Digicam Picture Center ("Printpix"), formerly known as the Aladdin print system, marketed by Fuji Photo Film Co., Ltd. and Fuji Photo Film U.S.A., Inc., a machine that allows users to add frames and backgrounds to their favorite photographs and digital images for output as stickers and cards. Photographs may be printed in a variety of print sizes and templates which are specified by the consumer.

The Printpix system makes use of shooting related meta data such as brightness value and whether or not a flash was used to adjust or facilitate optimization the print quality of the prints. The meta data used by the Printpix print system is created automatically by digital cameras at the time of shooting, and does not include any parameters that may be entered by the user.

Such systems that use meta data in conjunction with digital image files do not use meta files to facilitate the selection and processing of photographic prints and digital images by a user at a location remote from a lab, and do not allow for a lab or a user to enter useful data for easy use and processing of the digital image files.

### SUMMARY OF THE INVENTION

Generally speaking, exemplary embodiments of the present invention are directed to a system and method for selecting and ordering photographic prints from a location remote from a photo lab. The method may include taking a photograph by a photographer, resulting in an exposed roll of film, the roll including a plurality of film images. The exposed roll of film is made accessible to the lab, where it is received, and processed to create a plurality of digital images of the plurality of film images on the roll.

In general, the film images are scanned to create a positive high-resolution digital image. In some instances, a corresponding positive low-resolution digital image may also be created. Alternatively, film images may be scanned to create a positive low-resolution digital image, without the need for creating high-resolution digital image.

The high resolution digital image, the corresponding film image, and a low resolution digital image, if created, are associated to one another by a generated index number, which in turn corresponds to the associated film image. The index number may be manually or automatically generated and may include information, such as, but not limited to, an order identifier, a roll identifier for multiple roll orders, and an image identifier. This index number information may be further associated to lab-related data, such as, by way of non-limiting example, a lab-generated order identifier, a lab-generated film roll identifier and a lab-generated digital image identifier. Although it is possible that the image identifiers relate directly to the manufacturer's generated frame numbers, there is no requirement that they do so. Collectively, the lab-related data and the index number is referred to herein as the "lab-generated image data." Lab-generated image data and the associated digital image file are transmitted to the photographer at a remote location for manipulation and selection.

A lab digital image file is created, including digital image data related to the low-resolution digital images and lab-generated image data as a form of meta data (meta data being a common designation for data about data). This lab-generated image data as a form of meta data is referred to herein as the "lab meta data." The lab digital image file is made accessible at the remote location, where it is received. The lab digital image file is manipulated to display the low-resolution digital images at the remote location, and studio-generated digital image identifiers for identifying the low-resolution digital images that are created, the studio-generated identifiers being separate and distinct from the lab-generated digital image identifiers and any manufacturer generated frame numbers disposed on the roll of exposed film.

One or more of the low-resolution digital images at the remote location may be selected, as are order parameters related to the selected one digital image of the low-resolution digital images for ordering at least one photograph based upon the selected one digital image. A studio digital image file is created, the studio digital image file including the digital image data related to the low-resolution digital images, the lab meta data related to the lab data and order meta data related to the order parameters, wherein the order meta data includes the studio-generated digital image identifiers. This studio digital image file is made accessible at the lab, where it is received.

The high-resolution digital image corresponding to the low-resolution digital image selected at the studio is identified, by cross-referencing the studio-generated digital image identifiers with their corresponding lab-generated digital image identifiers. The identified high-resolution digital image is retrieved from the lab storage medium, and manipulated based upon the lab meta data and the order meta data.

A photographic print is created from the manipulated high-resolution digital image. The photographic print is made accessible to a customer, who may receive the photographic print.

As discussed below, while both high and low resolution images may be made, alternatively, only a low resolution digital image, instead of both high and low resolution digital images can be created. The low resolution digital image is manipulated and a photographic print is created from the low resolution image.

Alternatively, only a low resolution digital image, and not a high resolution digital image, may be initially created at the lab. After selection by the photographer, the film image corresponding to the selected low resolution image is identified. The identified film image is then retrieved, and a photographic print is created from the identified film image by using an optical printer.

In another alternative embodiment of the invention, only a low resolution digital image, and not a high resolution digital image is initially created at the lab. After selection by the photographer, the film image corresponding to the selected low resolution image is identified. The identified film image is then retrieved and a high resolution digital image is created by scanning the identified film image. The high resolution digital image is then manipulated based upon the lab meta data and order meta data and a photographic print is then created from the manipulated high resolution digital image.

An exemplary embodiment of the invention may include a method for selecting and ordering photographic prints from a remote location that is apart from a lab, the method comprising the steps of:
a) processing a roll of exposed film to produce a plurality of film images;
b) scanning the plurality of film images to create a digital image file;
c) manipulating the digital image file to create a positive low-resolution digital image for each of the plurality of film images;
d) creating lab meta data including lab-generated image identifiers for identifying the plurality of film images and the corresponding digital image file, the lab-generated image identifiers being independent of any manufacturer generated frame numbers disposed on the roll of exposed film;
e) including the lab-generated image data in the digital image file as meta data;
f) making the digital image files associated with the plurality of film images accessible at the remote location;
g) receiving one or more of the digital image files from the remote location;
h) accessing the lab-generated image identifiers of each of the digital images received from the remote location to identify the corresponding film image; and
i) creating a photographic print of each of the digital images received from the remote location using the identified film image.

Additionally, the method may further comprise the step of allowing the lab digital image file to be manipulated to display the low-resolution digital images at the remote location.

Additionally, the method may further comprise the step of allowing the creation of studio-generated image identifiers for identifying the low-resolution digital images, the studio-generated identifiers being separate and distinct from the lab-generated digital image identifiers and any manufacturer generated frame numbers disposed on the roll of exposed film.

Additionally, the method may further comprise the step of allowing the selection, at the remote location, of order data related to a selected one digital image of the low-resolution digital images for ordering at least one photograph based upon the selected one digital image.

Additionally, the method may further comprise the step of including the order meta data in the digital image file.

Other objects and features of the present invention will become apparent from the following detailed description, considered in conjunction with the accompanying system schematics, block diagrams and flow diagrams. It is understood, however, that the drawings, which are not to scale, are designed solely for the purpose of illustration and not as a definition of the limits of the invention for which reference should be made to the appended claims.

### BRIEF DESCRIPTION OF THE DRAWINGS

FIG. 1 depicts an exemplary schematic view showing components of a system for processing and ordering photographic prints in accordance with the present invention;
FIG. 2 is an exemplary block diagram showing components of a studio digital image file in accordance with the present invention;
FIG. 3 is an exemplary flowchart illustrating various actions which can be taken as the system depicted in FIG. 1 is used;
FIG. 4 is an exemplary block diagram showing film images on a roll of film, and corresponding high-resolution and low-resolution digital images;
FIG. 5 is an exemplary block diagram showing a graphical user interface that may be used in accordance with the present invention.
FIG. 6 is an exemplary flowchart illustrating various actions which can be taken as the system depicted in FIG. 1 is used;
FIG. 7 is an exemplary flowchart illustrating various actions which can be taken as the system depicted in FIG. 1 is used;
FIG. 8 is an exemplary flowchart illustrating various actions which can be taken as the system depicted in FIG. 1 is used; and
FIG. 9 is an exemplary flowchart illustrating various actions which can be taken as the system depicted in FIG. 1 is used.

### DETAILED DESCRIPTION OF THE PREFERRED EMBODIMENTS

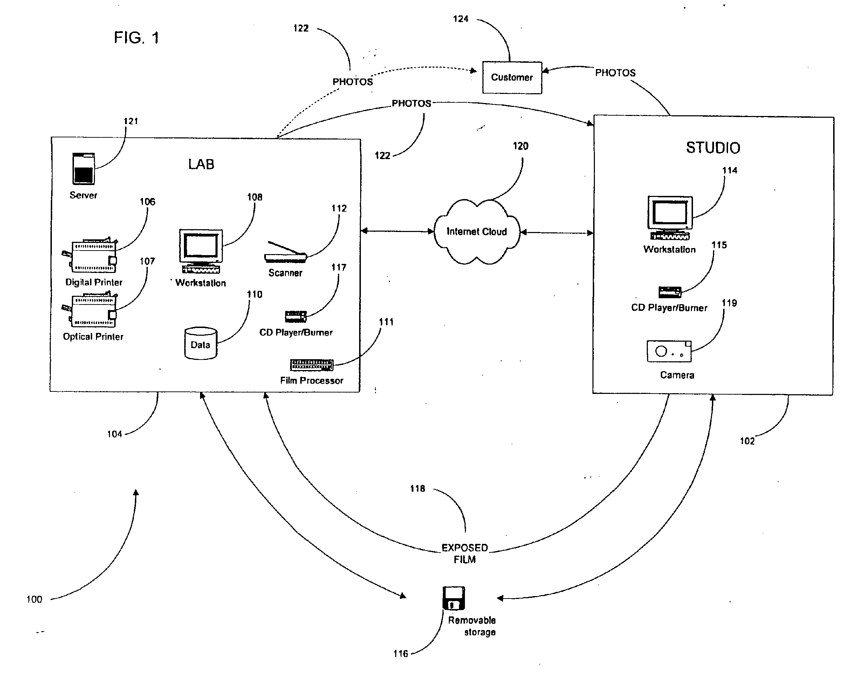

Referring to FIG. 1, there is shown an exemplary embodiment of a system 100 for processing and ordering photographic prints. The system 100 includes a photo lab 104 and a studio 102 for accessing manipulation and selecting images for printing. Lab 104 may be a photographic developing laboratory and houses devices and personnel that can create digital images from exposed photographic film and can also create a wide variety of digital photographic prints from digital image files.

Lab 104 generally houses various photo-finishing devices such as digital photographic printer 106 which may be used to create high quality digital photographic prints of various color technologies, sizes, colors, and layouts from digital images. Additionally, lab 104 may have optical printer 107 for creating high quality photographic prints from film images on a roll of film. Lab 104 may also have lab computer workstation 108, which may be loaded with appropriate computer software, such that digital images may be viewed. Lab computer workstation 108 may also be used to manipulate digital images by performing various functions such as cropping or retouching of the digital images. Lab computer workstation 108 may also facilitate storage of digital images to storage medium 110. Similarly, lab computer workstation 108 may be used to facilitate the retrieval of stored digital images from data storage medium 110. Lab 104 may also have photographic scanner 112. Photographic scanner 112 may be used to scan film images on an exposed roll of film to facilitate the creation of a digital image file. Additionally, lab 104 may have film processor 111, for processing exposed photographic film as is known by those skilled in the art. Lab 104 may also have lab CD Player/Burner 117, for storing digital image files on a removable storage medium 116. As discussed below, however, the digital images files need not be stored on a CD, but may be stored on any removable storage device as is or will be known to those skilled in the art. If the removable storage medium is a CD, various types of CDs such as CD Rs or CD RWs may be employed either alone or in combination. A server 121 may be associated with lab 104, and may be used to facilitate the transfer of digital image files.

Studio 102 may be a photo studio of a professional photographer or other similar photographic specialist. Those of skill in the art will also recognize that although the system and method disclosed herein is optimized for use by high-volume professional photographers, such as wedding photographers, it is within the scope of the present invention that the system and method be used for low-volume, single-roll, consumers. The remote system 102 typically will include studio computer workstation 114, which may be a personal computer (PC), or other similar computing device. Studio computer workstation 114 may be used to display digital images. Studio computer workstation 114 may also be used for viewing various digital images, selecting a digital image to be serviced, performing services on the digital image such as cropping or retouching, and/or entering order information regarding the selected digital images. Studio 102 may also have studio CD Player/Burner 115, for storing digital image files on a removable storage medium 116. As discussed below, however, the digital images files need not be stored on a CD, but may be stored on any removable storage device as is or will be known to those skilled in the art. Also as discussed above, if the removable storage medium is a CD, various types of CDs such as CD Rs or CD RWs may be employed either alone or in combination. An optical camera 119, as is known by those skilled in the art, may also be associated with studio 102, and may be used by a photographer to take photographs.

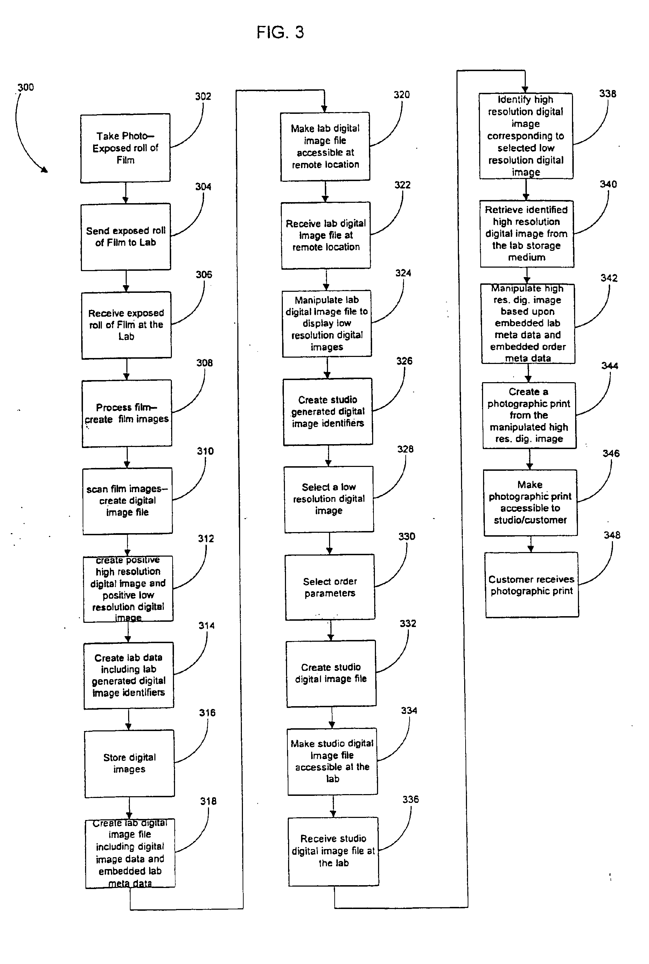

Referring back to FIG. 1 and to FIG. 3, an exemplary embodiment of a method for selecting and ordering photographic prints from the remote location that is apart from a lab is discussed. The method for selecting and ordering photographic prints 300 begins with a photographer taking photographs resulting in an exposed roll of film as is shown in step 302. The photographer may take one or several photographs resulting in one or a plurality of film images on the exposed roll of film 118. Next, the photographer sends the exposed roll of film 118 to lab 104 as is shown in step 304. Upon receipt of the exposed roll of film 118, as is shown in step 306, the lab 104 processes the exposed roll of film 118 to produce film images as is shown in step 308. In many instances the film images will be negative film images, as is the case with most conventional professional film types. However, color slide film and the like, which does not result in a negative film image, may also be used. Additionally, with regard to negative film images, both color negative film and black and white negative film (including chromogenic film) may be used. In either case, the film images are then scanned in photographic scanner 112 to create a digital image file as is shown in step 310. Next, if the scanned film image was a negative, the negative digital image file is manipulated to create a positive digital image as is shown in step 312. The method may include the step of creating both a positive high-resolution digital image and a positive low-resolution digital image. Alternatively, if only a high-resolution digital image is created, then only a high-resolution digital image may be stored. Similarly, if only a low-resolution digital image is created, then only a low-resolution digital image will be stored. Typically, however, as those of skill in the art will recognize, it is envisioned that only low-resolution image is created initially for the purpose of transmission to the photographer for selection, as will be described in greater detail below.

Generally, as described herein, a low-resolution image is one which may be conveniently transmitted, accessed and/or modified by a user while a high-resolution image is one of suitable resolution for producing high definition and high quality photographic prints. As the capabilities of digital image processing systems, computers, electronic systems and the like increase, however, the relative practical size of low resolution images is continuously increasing such that the difference between low-resolution images and high-resolution images may be blurred in the future.

The digital images are stored in data storage medium 110. Data storage medium 110 may be a computer hard drive or other storage medium as is known by those skilled in the art. Data storage medium 110 may be located within the lab 104, or may be remotely located at a digital storage facility (not shown) or other similar location. Next, lab-generated image data is created, including lab-generated digital image identifiers, such as an index number, to identify the various digital images and to properly correspond them with the film images on the exposed roll of film 118. In an exemplary embodiment, the index number includes at least an order identifier for tracking an associated group of rolls submitted for development by a photographer, a roll identifier for identifying a particular roll within an order, and an image identifier for corresponding the digital image with the appropriate film image. Next, if created, the positive low-resolution digital image and the positive high-resolution digital image are stored in data storage medium 110, as is shown in step 316.

As a next step, a lab digital image file is created as is shown in step 318. The lab digital image file includes both digital image data and lab-generated image data, which in an exemplary embodiment is stored as embedded meta data but may be stored as tagged meta data or in any other fashion now known or hereafter developed. As mentioned above, the lab-generated image data may include a lab-generated order identifier, a lab-generated film roll identifier and a lab-generated digital image identifier. The lab-generated image data may include one, all, or a combination of these exemplary types of lab data or may include other types of lab data. In an exemplary embodiment, the lab-generated image data is embedded in the digital image file along with the digital image data and not stored or transmitted as a separate file or as header information for the digital image data. The lab digital image file is then made accessible at a remote location such as studio 102, as is shown in step 320. With reference to FIG. 1, the lab digital image file may be made accessible at the remote location or studio 102 in various manners such as by way of non-limiting example, by storing the lab digital image file on removable storage device 116. Removable storage device 116 may include diskettes, CD Rs, CD RWs or any other portable storage device for digital data as is presently known or may be known in the future by those skilled in the art. Alternatively, the lab digital image file may be made accessible at the remote location or studio 102 via a communication network, or a wide area network (WAN) such as, for example, the Internet 120. In an alternate embodiment, the lab digital image file may be made accessible at the remote location or studio 102 via a direct connection using a file transfer protocol (FTP) server. In an exemplary embodiment, the lab digital image file is made accessible to the remote location one or all of the aforementioned manners.

Returning to FIG. 3, the method is further discussed. After being made accessible, the lab digital image file may be received at the remote location or lab 104, as is shown in step 322. A photographer or other user at studio 102 may then use studio computer workstation 114 and software installed thereon to manipulate the lab digital image file and display the low-resolution images, as is shown in step 324. Studio-generated digital image identifiers may then be generated for identifying the various low-resolution digital images, as is shown in step 326. The studio-generated digital image identifiers may either be generated automatically by the system software, or manually by the photographer. The studio-generated digital image identifiers are separate and distinct from the lab-generated digital image identifiers used by the lab. Further, both the studio-generated digital image identifiers, and the lab-generated digital image identifiers are separate and distinct from any manufacturer generated frame identifiers placed on the roll of film during the manufacturing process.

Because the lab-generated digital image identifiers are separate and distinct from the manufacture generated identifiers, the lab, or workers at the lab, have the flexibility to provide identifiers even when film images on the film do not correspond exactly to the manufacture frame numbers such as, for example, when non-standard frame sizes are used, or when a professional photographer shoots a picture on a portion of film before the first manufacture frame number in order to make better use of the film, or in the case of specialty films which do not have manufacturer frame numbers. Additionally, the lab is provided with the flexibility to add additional information to the lab-generated index numbers that is not provided by the manufacturer frame numbers such as, for example, when multiple rolls of film exist in a single order, or when additional lab information such as date and the particulars of the developing process and scanning process are to be recorded.

With respect to the studio-generated digital image identifiers, the benefit of having these identifiers separate and distinct from the lab and manufacturer frame numbers is that a photographer at the studio may have different preferences for identifying the digital images such as including information about the customer, the circumstances of taking the pictures, and other preferences. Accordingly, a benefit of the present method is that the lab and the studio may employ their own unique digital image identifiers to suit their own preferences and circumstances, and neither of these identifier schemes need be restricted by the limitations of the manufacturer frame numbers on the film.

The photographer may then select a low-resolution digital image for viewing and closer inspection of the digital images, as is shown in step 328. Alternatively, if a high-resolution digital image is sent instead of a low-resolution digital image, then a high-resolution digital image may be selected. The photographer may then select various order parameters for the selected digital image, as is shown in step 330. The order parameters or order data may include, by way of non-limiting example, print numbers to be ordered, print size information, a cropping request, a retouching request, a delivery deadline or a color, density or contrast correction request. Software on the studio computer workstation allows the photographer to specify specific cropping requirements as well as retouching requirements for the digital image. The photographer may perform the procedure such as cropping or retouching on the studio computer workstation or make a specific request such as, for example, retouch shadowing around the eyes or the selection of borders and photocomposition templates, and have these procedures performed by the lab.

Alternatively, the digital image file may be exported to another software program, external to the system, such as Adobe® Photoshop® for retouching, cropping and the like and then imported back into the software of the present system.

Next, a studio digital image file is created, as is shown in step 332. The studio digital image file includes the digital image data related to the low-resolution digital images that have been selected, the embedded lab meta data created at the lab, and embedded order meta data related to the selected order parameters. In an exemplary embodiment, order meta data is stored as embedded meta data, but may be stored as tagged meta data, or in any other fashion now known, or hereafter developed. In accordance with the present invention, it should be understood that while the system exhibits many benefits when a photographer shoots multiple pictures on several rolls of film and selects several digital images for ordering to be made into photographic prints, the present system also applies if only a single photograph is taken or if only one digital image is selected for ordering. The studio digital image file is then made accessible at the lab, as is shown by step 334. With reference again to FIG. 1, and as discussed above with respect to step 320, the studio digital image file may be made accessible at the lab by various means such as by storing the studio digital image file on a removable storage device 116 such as, for example, a diskette or CD, or studio digital image file may be transmitted over a dedicated network, or a wide area network (WAN) such as, for example, the Internet 120. Next, the studio digital image file is received at the lab, as is shown by step 336. At the lab, the high-resolution digital images corresponding to the selected low-resolution digital images are identified, as is shown in step 338. As discussed above, while in an exemplary embodiment, a high-resolution digital image is stored while a low-resolution digital image is made accessible at the studio, in the alternative, only the high-resolution digital image, or low-resolution digital image may be used. Alternatively, both a high-resolution digital image and a low-resolution digital image may be made accessible by the lab to the studio.

The identified high-resolution digital image or digital images are then retrieved from the lab storage medium 110, as is shown in step 340. The high-resolution digital image or digital images are then manipulated based upon the lab meta data and order meta data to create the selected digital images as requested by the photographer at the studio, as is shown in step 342. Next, printer 106 is used to create a photographic print from the manipulated high-resolution digital image in accordance with the requested parameters from the photographer at the studio, as is shown in step 344. Next, the photographic prints 122 are made accessible to a customer 124. Photographic prints 122 may be delivered to the mutual customer of the lab 104 and studio 102 or, alternatively, may be delivered to studio 102 so that customer may access them at the studio 102. Alternatively, photographic prints 122 may be delivered to, for example, a photo specialty shop, camera shop, supermarket, pharmacy, or left at the lab 104 for pick up by the customer, as is shown in step 346. Finally, the customer, or the studio, receives the requested photographic prints, as is shown in step 348.

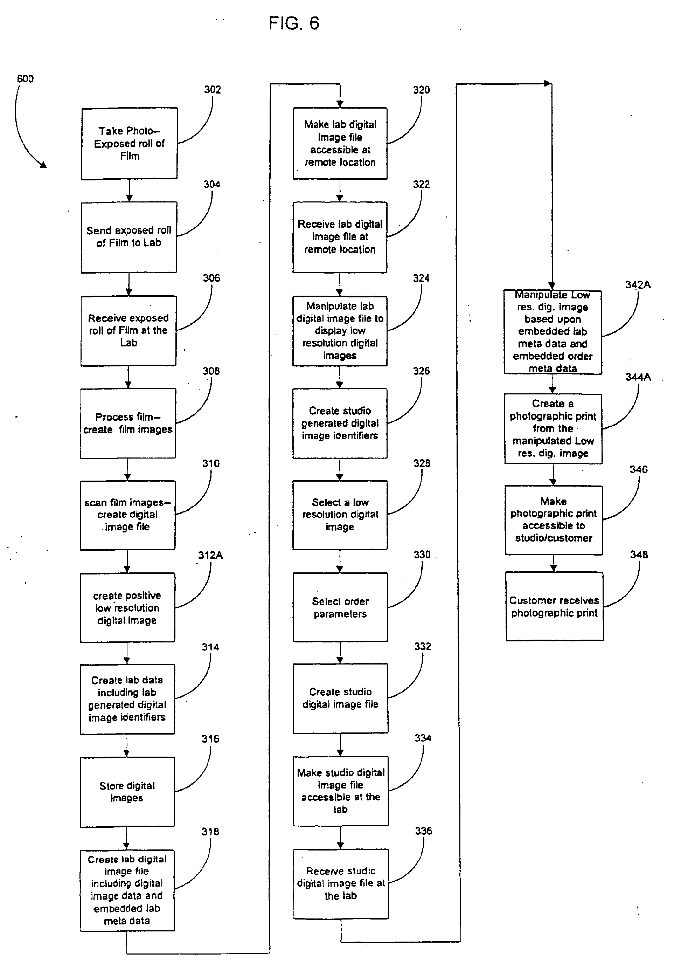

With reference to FIGS. 6-8, alternate exemplary embodiments of a method for selecting and ordering photographic prints from the remote location are shown. These embodiments are similar to the method discussed above with reference to FIG. 3. The steps common to both embodiments have been denoted by the same numbers, and these common steps, having been discussed above, will not be described again in this section for the purpose of brevity.

With reference to FIG. 6, in an embodiment 600 of the method shown, at step 312A, only a low resolution digital image, instead of both high and low resolution digital images as discussed in a previous embodiment, is created. Moving ahead to step 342A, the low resolution digital image is manipulated and a photographic print is created from the low resolution image, as is shown in step 344A. By this embodiment, no high resolution digital image, and its resulting requirement for additional memory, need be created, as the photographic print is made from the low resolution image. The picture quality resulting from the use of low resolution digital image files is adequate for many relatively small photographic prints.

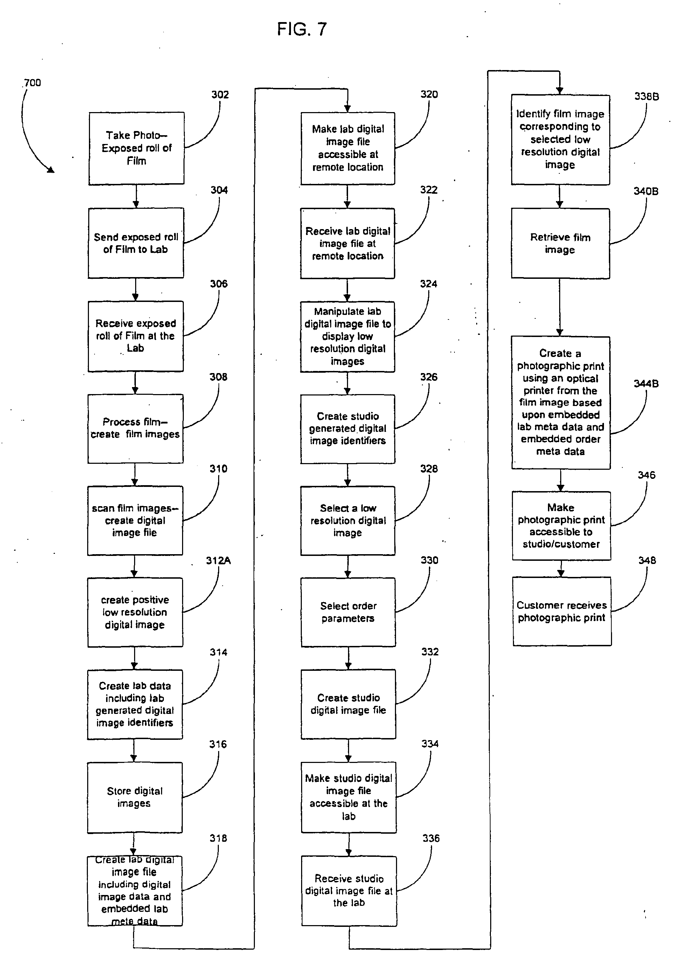

Referring to FIG. 7, another embodiment 700 of the method is shown. In this embodiment, in step 312A, only a low resolution digital image, and not a high resolution digital image, is initially created at the lab. Moving to step 338B, after selection by the photographer, the film image corresponding to the selected low resolution image is identified. The identified film image is then retrieved, as is shown in step 340B, and a photographic print is produced from the identified film image by using an optical printer. Specific requests regarding the order, found in the lab meta data and the order meta data, are used to create the photographic print, as is shown in step 344B. By this embodiment, as is the case in the embodiment discussed above with reference to FIG. 6, a high resolution digital image need not be created.

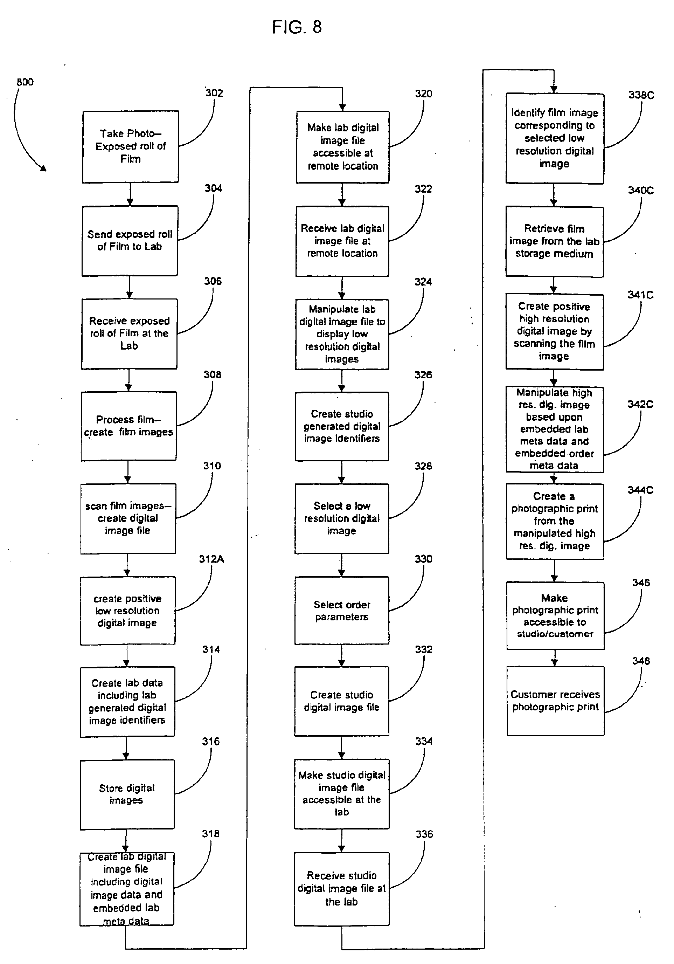

Referring to FIG. 8, another embodiment 800 of the method is shown. In this embodiment, in step 312A, only a low resolution digital image, and not a high resolution digital image is initially created at the lab. Moving ahead to step 338C, after selection by the photographer, the film image corresponding to the selected low resolution image is identified. The identified film image is then retrieved, as is shown in step 340C, and a high resolution digital image is created by scanning the identified film image as is shown in step 341C. The high resolution digital image is then manipulated based upon the lab meta data and embedded order meta data, as is shown in step 342C. A photographic print is then created from the manipulated high resolution digital image. The method of this embodiment is similar to the embodiment discussed above with reference to FIG. 3, except that high resolution digital images are only made of digital images selected by the photographer, and not of all shots taken. A benefit of this embodiment is that relatively fewer high resolution images are made, reducing the need for memory storage capacity. Fewer high resolution images need be made because professional photographers, as well as other photographers, tend to shoot far more pictures than they select for printing.

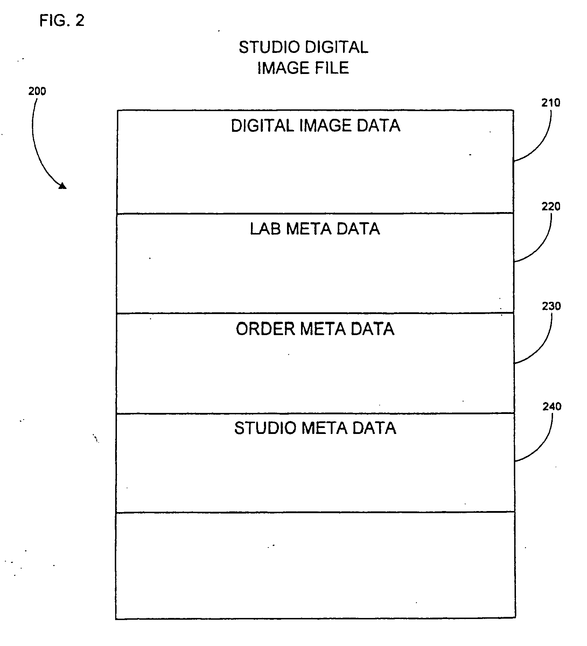

With reference to FIG. 2, a block diagram of the studio digital image file 200 is shown. It may be seen that studio digital image file 200 includes digital image data 210, lab meta data 220, order meta data 230 and studio meta data 240. In an exemplary embodiment, the various types of meta data are embedded and combined with digital image data in studio digital image file 200. In an embodiment, the lab meta data 220, order meta data 230 and studio meta data 240 may not be transmitted as files separate from the digital image data 210 or as header information for digital image data 210 but as embedded parts of studio digital image file 200. In embodiments of the invention, meta data may be stored as tagged meta data, or in any other form now known or hereafter developed.

The studio digital image file 200 may be formed in any suitable digital image file format such as JPEG, TIFF, GIF, BMP or other digital image formats as are known or will be known to those skilled in the art.

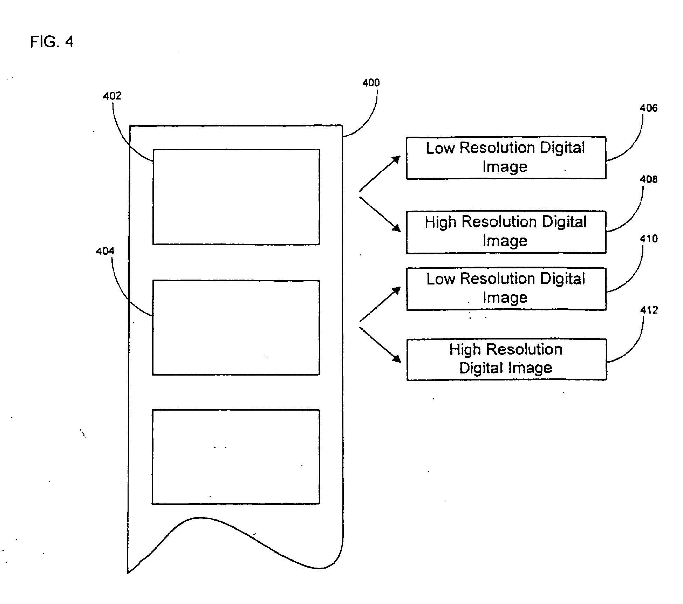

With reference to FIG. 4, there is shown exposed roll of film 400. Exposed roll of film 400 has a first film image 402 and a second film image 404. In an exemplary embodiment of the present invention, for each film image on exposed roll of film 400, both a low-resolution digital image and a high-resolution digital image are created. For example, for first film image 402, first low-resolution digital image 406 and first high-resolution digital image 408 are both created. Similarly, for second film image 404, a second low-resolution digital image 410 and a second high-resolution digital image 412 are created. The benefit of having a low-resolution digital image and a corresponding high-resolution digital image is that the low-resolution digital image, having a relatively smaller file size, facilitates quick processing of service requirements such as retouching and cropping. Since, once returned to the lab, the low-resolution digital image may be associated with the corresponding high-resolution digital image, the high-resolution digital image may be used to generate a high quality photographic print. As is discussed above, however, in an alternative embodiment, the present method and system may employ only low-resolution digital images or only high-resolution digital images. Alternatively, both high-resolution and low-resolution digital images may be made accessible by the lab to the studio.

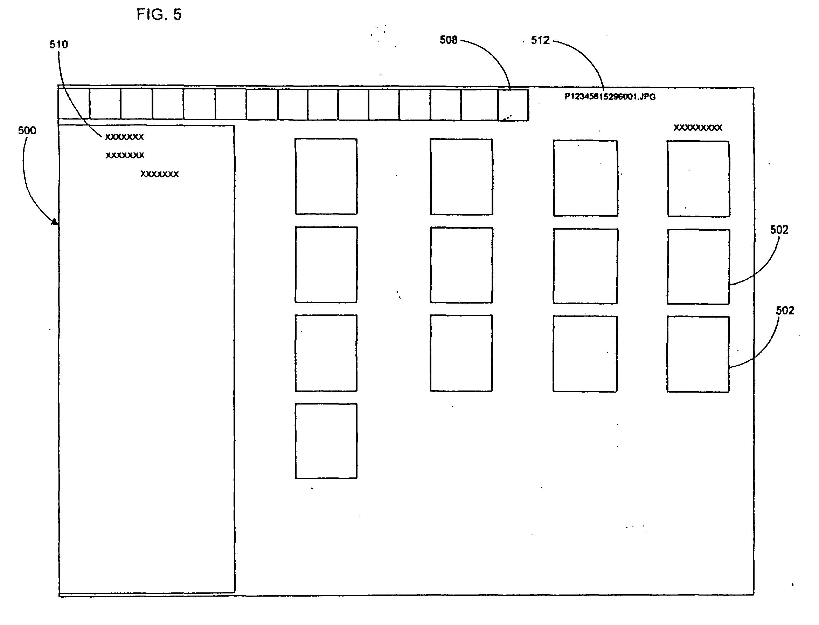

With reference to FIG. 5, there is shown a graphic user interface (GUI) 500 in accordance with an exemplary embodiment of the present invention. Studio computer workstation GUI 500 may display digital images 502 made accessible from the lab. The photographer or user may select one of the digital images 502 be displayed. Once selected, a photographer or user may then select from various service request selectors 508 such as, by way of non-limiting example, retouching and cropping requests or color, density and contrast correction requests. Additionally, other ordering information such as size of the requested photographic prints, and quantity as well as the entry of studio-generated identifiers may be accomplished. Digital image files may be associated with a digital image identifier 512, and the digital images may be grouped into digital "folders" 510 to facilitate organization of the various digital image files.

Furthermore, with reference back to FIGS. 1, 3 and 6-8, camera 119 may be an optical camera or a digital camera. When a digital camera is employed by a photographer, the digital image may be downloaded or transferred, either directly or indirectly, from a memory device within camera 119 to studio workstation 114. At studio workstation 114, the user or photographer may select images and order parameters as discussed above. Additionally, shooting data may be transferred directly from camera 119 to workstation 114. This shooting data may later be included as meta data in the digital image file as is discussed above, along with, or instead of order data.

Moreover, if camera 119 is a digital camera, then the steps involving the photographic film may be skipped when performing exemplary embodiments of the invention as discussed above. Either a high resolution or a low resolution digital image may be viewed by the photographer, and either a high resolution, low resolution, or both types of digital images may be transferred from the studio to the lab. In this exemplary embodiment of the invention, however, there is no need for photographic film to be used, either by the lab or by the studio. Accordingly, except for the steps pertaining directly to film and film images, the above-discussed system and method may also be used in combination with a digital camera without the use of photographic film.

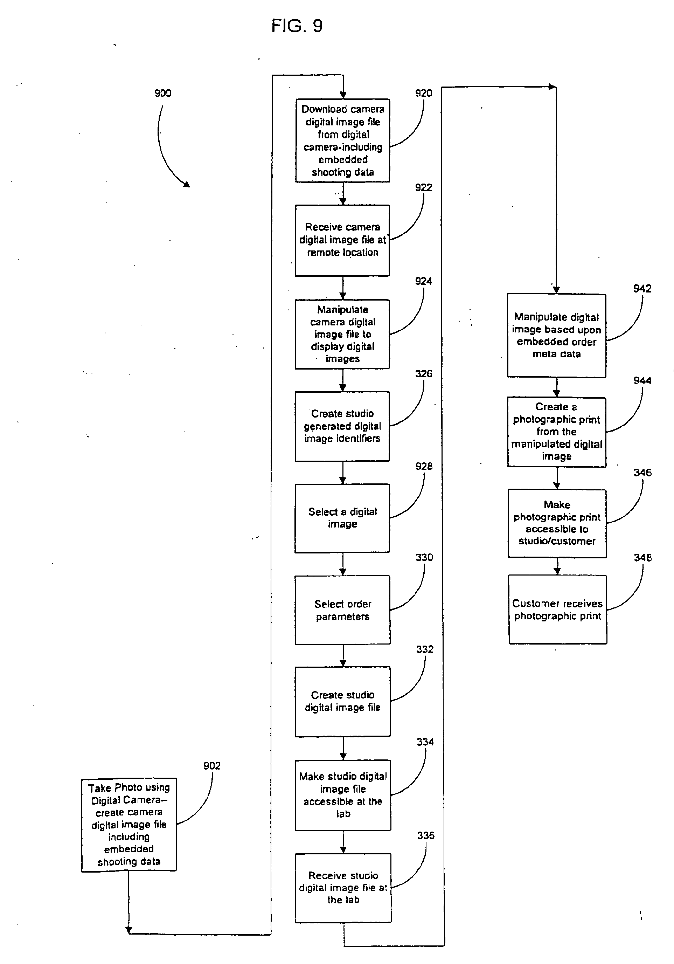

Referring to FIG. 9, there is shown an alternative exemplary embodiment 900 of the invention in which a digital camera 119 is used. In this embodiment, a photographer may take a photograph using a digital camera. When the photograph is taken, a camera digital image file is created in the digital camera 119, as is shown in step 902. The camera digital image file includes a digital image and may also include shooting related data such as whether a flash is used, the time and date of the picture, other camera settings, and other pertinent shooting data. Digital camera 119 may be any presently known or developed in the future by those skilled in the art, as long as a digital image may be created by the camera.

The camera digital image file is then downloaded or transferred from the digital camera as is shown in step 920. The digital image file may be downloaded or transferred directly via a serial communication link from digital camera 119 into a computer system at the remote location. Alternatively, the digital image file may be stored on a removable camera memory storage device as is known by those skilled in the art. The removable memory storage device may be removed from digital camera 119 and inserted or placed in a digital communication device at the remote location so that the digital image file may be transferred. The removable camera memory storage device may take the form of, by way of non-limiting example, a diskette, a CD, a PCMCIA card, a Flash Memory like Compact Flash, Smart Media or Memory Stick, a Micro drive, or other art recognized removable memory storage device.

The camera digital image file is thus received at the remote location, as is shown in step 922.

The camera digital image file is then manipulated to such that the digital images may be viewed at the remote location, or studio, as is shown in step 924. At the studio, as discussed above with regard to other embodiments of the invention, studio-generated digital image identifiers may be generated, as is shown in step 326, and a digital image may be selected, as is shown in step 928.

Next, a studio digital image file is created, as is discussed above with respect to other embodiments, with like-numbered steps designating similar steps to those discussed above with respect to other embodiments.

After the lab receives the digital image file (step 336), the digital image is manipulated based upon order meta data (step 942), and a photographic print is created from the manipulated digital image (step 944). As discussed above, with respect to alternate embodiments of the invention, the photographic print is then made available to the customer (step 346) and may be received by the customer, as is shown in step 348.

Thus, while there have been shown and described and pointed out novel features of the present invention as applied to preferred embodiments thereof, it will be understood that various omissions and substitutions and changes in the form and details of the disclosed invention may be made by those skilled in the art without departing from the spirit of the invention. It is the intention, therefore, to be limited only as indicated by the scope of the claims appended hereto.

It is also to be understood that the following claims are intended to cover all of the generic and specific features of the invention herein described and all statements of the scope of the invention which, as a matter of language, might be said to fall there between. In particular, this invention should not be construed as being limited to the dimensions, proportions or arrangements disclosed herein.

### Preferred Embodiments of the Invention

1. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a digital image file;
   c) manipulating the digital image file to create a positive low-resolution digital image (406, 410) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing the lab-generated image identifiers of each of the digital images (406, 410) received from the remote location to identify the corresponding film image; and
   h) creating a photographic print (122) of each of the digital images (406, 410) received from the remote location using the identified film image.
2. The method of claim 1, further comprising the step of allowing the lab digital image file to be manipulated to display the low-resolution digital images (406, 410) at the remote location.
3. The method of claim 1, further comprising the step of allowing the creation of studio-generated image identifiers for identifying the low-resolution digital images (406, 410), the studio-generated identifiers being separate and distinct from the lab-generated digital image identifiers and any manufacturer generated frame numbers disposed on the roll of exposed film (118, 400).
4. The method of claim 1, further comprising the step of allowing the selection, at the remote location, of order data related to a selected one digital image of the low-resolution digital images (406, 410) for ordering at least one photograph based upon the selected one digital image.
5. The method of claim 4, further comprising the step of embedding the order data in the digital image file.
6. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a digital image file;
   c) manipulating the digital image file to create a positive low-resolution digital image (406, 410) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing each of the digital images (406, 410) received from the remote location; and
   h) creating a photographic print (122) of each of the positive low-resolution digital images (406, 410) received from the remote location using the positive low-resolution digital images (406,410).
7. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a first digital image file;
   c) manipulating the digital image file to create a positive low-resolution digital image (406, 410) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing the lab-generated image identifiers of each of the digital images (406, 410) received from the remote location to identify the corresponding film image;
   h) scanning the corresponding film images to create a second digital image file;
   i) manipulating the digital image file to create a positive high-resolution digital image (408, 412) for the corresponding film image; and
   j) creating a photographic print (122) of each of the digital images (406, 410) received from the remote location using the positive high-resolution digital image (408, 412).
8. The method of claim 7, further comprising the step of allowing the lab digital image file to be manipulated to display the low-resolution digital images (406, 410) at the remote location.
9. The method of claim 7, further comprising the step of allowing the creation of studio-generated image identifiers for identifying the low-resolution digital images (406, 410), the studio-generated identifiers being separate and distinct from the lab-generated digital image identifiers and any manufacturer generated frame numbers disposed on the roll of exposed film (118, 400).
10. The method of claim 7, further comprising the step of allowing the selection, at the remote location, of order data related to a selected one digital image of the low-resolution digital images (406, 410) for ordering at least one photograph based upon the selected one digital image.
11. The method of claim 10, further comprising the step of embedding the order data in the digital image file.
12. A method for selecting and ordering photographic prints (122) from a remote location that is apart from a lab.(104), the method comprising the steps of:
   a) processing exposed film (118, 400) to produce a plurality of film images (402, 404);
   b) scanning the plurality of film images (402, 404) to create a digital image file;
   c) manipulating the digital image file to create a positive low-resolution digital image (406, 410) and a positive high-resolution digital image (408, 412) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing the lab-generated image identifiers of each of the digital images (408, 412) received from the remote location to identify the corresponding positive high-resolution digital image (408, 412);
   h) creating a photographic print (122) of each of the digital images (408, 412) received from the remote location using the corresponding positive high-resolution digital image (408, 412).
13. The method of claim 12, further comprising the step of allowing the lab digital image file to be manipulated to display the low-resolution digital images (406, 410) at the remote location.
14. The method of claim 12, further comprising the step of allowing the creation of studio-generated image identifiers for identifying the low-resolution digital images (406, 410), the studio-generated identifiers being separate and distinct from the lab-generated digital image identifiers and any manufacturer generated frame numbers disposed on the roll of exposed film (118, 400).
15. The method of claim 12, further comprising the step of allowing the selection, at the remote location, of order data related to a selected one digital image of the low-resolution digital images (406, 410) for ordering at least one photograph based upon the selected one digital image.
16. The method of claim 15, further comprising the step of embedding the order data in the digital image file.
17. The method of claim 4, wherein the order related meta data is chosen from the group consisting of print size, print numbers, a cropping request, a retouching request a delivery deadline and a color, density and contrast correction request.
18. The method of claim 1, wherein making the digital image files associated with the plurality of film images (402, 404) accessible at the remote location comprises the steps of storing the lab digital image file on a storage medium and sending the storage medium to the photographer's studio (102).
19. The method of claim 1, wherein making the digital image files associated with the plurality of film images (402, 404) accessible at the remote location comprises the step of transmitting the lab digital image file via a wide area network (WAN).
20. The method of claim 1, wherein making the lab digital image file accessible at the remote location comprises the step of transmitting the lab digital image file via a File Transfer Protocol (FTP) server directly communicating with the lab (104) from the studio (102).
21. A system for selecting and ordering photographic prints (122) from a remote location that is apart from a lab (104), the system comprising:
   a film processor (111) adapted to process a roll of exposed film (118, 400) to produce a plurality of film images (402, 404);
   a film scanner (112) adapted to create a digital image file from the plurality of film images (402, 404);
   a first computing device adapted to;
      manipulate the digital image file to create a positive low-resolution digital image (406, 410) for each of the plurality of film images (402, 404);
      create lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
      facilitate making the digital image files associated with the plurality of film images (402, 404) accessible at the remote location;
      receive one or more of the digital image files from the remote location; and
      access the lab-generated image identifiers of each of the digital images (406, 410) received from the remote location to identify the corresponding film image; and
   a printer (106) adapted to create a photographic print (122) of each of the digital images (406, 410) received from the remote location.
22. The system of claim 21, wherein the printer (106) uses the identified film image to create a photographic print (122).
23. The system of claim 21, wherein the printer (106) uses a digital image associated with the identified film image to create a photographic print (122).
24. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a digital image file;
   c) manipulating the digital image file to create a positive low-resolution digital image (406, 410) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location along with order data specifying a requested print size;
   g) accessing each of the digital images (406, 410) received from the remote location; and
   h) determining whether a high-resolution digital image (408, 412) or a low-resolution digital image (406, 410) should be used to create a photographic print (122) based upon whether the requested print size is relatively small;
   i) if the requested print size is relatively small, creating a photographic print (122) of each of the positive low-resolution digital images (406, 410) received from the remote location using the positive low-resolution digital images (406, 410); and
   j) if the requested print size is not relatively small;
      accessing the lab-generated image identifiers of each of the digital images (406,410) received from the remote location to identify the corresponding film image;
      scanning the corresponding film image to create a digital image file;
      manipulating the digital image file to create a positive high-resolution digital image (408, 412) for the corresponding film image; and
      creating a photographic print (122) of each of the digital images (406, 410) received from the remote location using the positive high-resolution digital image (408, 412).
25. A method for selecting and ordering photographic prints (122) from a remote location that is apart from a lab (104), the method comprising the steps of:
   a) receiving a camera digital image file from a digital camera at the remote location;
   b) creating a low resolution digital image file and a high resolution digital image file from the camera digital image file;
   c) allowing the low resolution digital image file to be manipulated;
   d) receiving the low resolution digital image file and the high resolution digital image file from the remote location;
   e) manipulating the high-resolution digital image based upon the order data and the manipulated low resolution digital image file;
   f) creating a photographic print (122) from the manipulated high-resolution digital image.
26. The method of claim 25, further comprising the step of allowing the creation of studio-generated image identifiers for identifying the low-resolution digital images, the studio-generated identifiers being separate and distinct from any lab-generated digital image identifiers.
27. The method of claim 25, wherein the manipulation of the low resolution digital image file includes a function chosen from the group consisting of retouching, cropping, color, density and contrast adjustment.
28. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a first digital image file;
   c) manipulating the first digital image file to create a positive low-resolution digital image (406, 410) and a first positive high-resolution digital image (408, 412) for each of the plurality of film images (402, 404);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing the lab-generated image identifiers of each of the digital images (406, 410) received from the remote location to identify the corresponding film image;
   h) scanning the corresponding film image to create a second digital image file;
   i) manipulating the second digital image file to create a second positive high-resolution digital image (408, 412) for the corresponding film image, whereby the second positive high-resolution digital image (408, 412) has a higher resolution than the first positive high-resolution digital image (408, 412); and
   j) creating a photographic print (122) of each of the digital images (406, 410) received from the remote location using the second positive high-resolution digital image (408, 412).
29. The method of claim 1, further comprising the step of embedding the lab meta data (220) in the digital image file.
30. The method of claim 1, wherein the lab meta data (220) is stored as tagged data.
31. The method of claim 4, wherein the order data is stored as tagged data.
32. The method of claim 6, further comprising the step of embedding the lab meta data (220) in the digital image file.
33. The method of claim 6, wherein the lab meta data (220) is stored as tagged data.
34. The method of claim 7, further comprising the step of embedding the lab meta data (220) in the digital image file.
35. The method of claim 7, wherein the lab meta data (220) is stored as tagged data.
36. The method of claim 10, wherein the order data is stored as tagged data.
37. The method of claim 12, further comprising the step of embedding the lab meta data (220) in the digital image file.
38. The method of claim 12, wherein the lab meta data (220) is stored as tagged data.
39. The method of claim 15, wherein the order data is stored as tagged data.
40. The method of claim 21, the first computing device being further adapted to embed the lab meta data (220) in the digital image file.
41. The method of claim 21, the first computing device being further adapted to store the lab meta data (220) as tagged data.
42. The method of claim 24, further comprising the step of embedding the lab meta data (220) in the digital image file.
43. The method of claim 24, wherein the lab meta data (220) is stored as tagged data.
44. The method of claim 25, further comprising the step of allowing order data to be embedded in the low resolution digital image file.
45. The method of claim 25, further comprising the step of allowing order data to be stored as tagged data.
46. The method of claim 28, further comprising the step of embedding the lab meta data (220) in the digital image file.
47. The method of claim 28, wherein the lab meta data (220) is stored as tagged data.
48. A method for selecting and ordering photographic prints (122) from a remote location that is apart from a lab (104), the method comprising the steps of:
   a) processing exposed film (118, 400) to produce a plurality of film images (402, 404);
   b) scanning the plurality of film images (402, 404) to create a digital image file;
   c) manipulating the digital image file to create a positive digital image for each of the plurality of film images (402, 404), each of the positive digital images being at least one of a high-resolution digital image (408, 412) and a low-resolution digital image (406, 410);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing the lab-generated image identifiers of each of the digital images received from the remote location to identify the corresponding film image; and
   h) creating a photographic print (122) of each of the digital images received from the remote location using the identified film image.
49. The method of claim 48, further comprising the step of allowing the lab digital image file to be manipulated to display the digital images at the remote location.
50. The method of claim 48, further comprising the step of allowing the creation of studio-generated image identifiers for identifying the digital images, the studio-generated identifiers being separate and distinct from the lab-generated digital image identifiers and any manufacturer generated frame numbers disposed on the roll of exposed film (118, 400).
51. The method of claim 48, further comprising the step of allowing the selection, at the remote location, of order data related to a selected one digital image of the digital images for ordering at least one photograph based upon the selected one digital image.
52. The method of claim 51, further comprising the step of embedding the order data in the digital image file.
53. A method for selecting and ordering photographic prints (122) from a remote location that is apart from a lab (104), the method comprising the steps of:
   a) processing exposed film (118,400) to produce a plurality of film images (402, 404);
   b) scanning the plurality of film images (402, 404) to create a digital image file;
   c) manipulating the digital image file to create a positive digital image for each of the plurality of film images (402, 404), each of the positive digital images being at least one of a high-resolution digital image (408, 412) and a low-resolution digital image (406, 410);
   d) creating lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
   e) making the digital image files associated with the plurality of film images (402, 404) accessible at the remote location;
   f) receiving one or more of the digital image files from the remote location;
   g) accessing each of the digital images received from the remote location; and
   h) creating a photographic print (122) of each of the positive digital images received from the remote location using the positive digital images.
54. A system for selecting and ordering photographic prints (122) from a remote location that is apart from a lab (104), the system comprising:
   a film processor (111) adapted to process a roll of exposed film (118, 400) to produce a plurality of film images (402, 404);
   a film scanner (112) adapted to create a digital image file from the plurality of film images (402, 404);
   a first computing device adapted to;
      manipulate the digital image file to create a positive digital image for each of the plurality of film images (402, 404), each of the positive digital images being at least one of a high-resolution digital image (408, 412) and a low-resolution digital image (406, 410);
      create lab meta data (220) including lab-generated image identifiers for identifying the plurality of film images (402, 404) and the corresponding digital image file, the lab-generated image identifiers being independent of any manufacturer generated frame numbers disposed on the roll of exposed film (118, 400);
      facilitate making the digital image files associated with the plurality of film images (402, 404) accessible at the remote location;
      receive one or more of the digital image files from the remote location; and
      access the lab-generated image identifiers of each of the digital images received from the remote location to identify the corresponding film image; and
   a printer (106) adapted to create a photographic print (122) of each of the digital images received from the remote location.
55. The system of claim 54, wherein the printer (106) uses the identified film image to create a photographic print (122).
56. The system of claim 54, wherein the printer (106) uses a digital image associated with the identified film image to create a photographic print (122).

## Claims

1. A method for selecting and ordering photographic prints (122) from a remote location that is apart from a lab (104), the method comprising the steps of:
a) receiving a camera digital image file from a digital camera at the remote location;
b) creating a low resolution digital image file and a high resolution digital image file from the camera digital image file;
c) allowing the low resolution digital image file to be manipulated;
d) receiving the low resolution digital image file and the high resolution digital image file from the remote location;
e) manipulating the high-resolution digital image based upon the order data and the manipulated low resolution digital image file;
f) creating a photographic print (122) from the manipulated high-resolution digital image.

2. The method of claim 1, further comprising the step of allowing the creation of studio-generated image identifiers for identifying the low-resolution digital images, the studio-generated identifiers being separate and distinct from any lab-generated digital image identifiers.

3. The method of claim 1 , wherein the manipulation of the low resolution digital image file includes a function chosen from the group consisting of retouching, cropping, color, density and contrast adjustment.
